# EUROPÄISCHE PATENTSCHRIFT

(11) **EP 3 592 628 B1**
(45) Veröffentlichungstag und Bekanntmachung des Hinweises auf die Patenterteilung: **22.09.2021**
(21) Anmeldenummer: 18702183.7
(22) Anmeldetag: 24.01.2018
(51) Int. Cl.: B62D 15/02, B60W 30/06, G06Q 10/02, G08G 1/14

(54) **VERFAHREN ZUM BETRIEB EINES KRAFTFAHRZEUGS, KRAFTFAHRZEUG UND SENDEEINRICHTUNG**
METHOD FOR OPERATING A MOTOR VEHICLE, MOTOR VEHICLE, AND TRANSMISSION DEVICE
PROCÉDÉ POUR FAIRE FONCTIONNER UN VÉHICULE À MOTEUR, VÉHICULE À MOTEUR ET DISPOSITIF ÉMETTEUR

(30) Priorität: 09.03.2017 DE 102017203904
(43) Veröffentlichungstag der Anmeldung: 15.01.2020
(73) Patentinhaber: Audi AG, 85045 Ingolstadt (DE)
(72) Erfinder: WILDING, Werner, 85137 Walting (DE); MÖLLER, Malte, 94360 Mitterfeld (DE)
(86) Internationale Anmeldenummer: PCT/EP2018/051653
(87) Internationale Veröffentlichungsnummer: WO 2018/162140

(56) Entgegenhaltungen:
- EP-A1- 2 772 876
- DE-A1-102015 003 888
- DE-A1-102015 211 514
- US-A1- 2012 044 091

## Beschreibung

Die Erfindung betrifft ein Verfahren zum Betrieb eines Kraftfahrzeugs hinsichtlich eines vorzunehmenden Parkvorgangs auf einem Abstellplatz, wobei das Kraftfahrzeug ein Fahrzeugsystem aufweist, das zur Detektion und Auswahl des zu verwendenden Abstellplatzes aus einer Mehrzahl von Kandidatenabstellmöglichkeiten ausgebildet ist. Daneben betrifft die Erfindung ein Kraftfahrzeug und eine Sendeeinrichtung.

Im Stand der Technik wurden bereits Parkassistenzsysteme vorgeschlagen, die für ein Kraftfahrzeug Parklücken bzw. Abstellmöglichkeiten detektieren können und/oder auch zumindest einen Teil des Abstellvorgangs, also Parkvorgangs, automatisiert unterstützen und/oder durchführen können. Dabei werden insbesondere Umgebungssensoren des Kraftfahrzeugs genutzt, um freie Parklücken als Kandidatenabstellmöglichkeiten zu detektieren und insbesondere auch zu vermessen. Ist die Parklücke groß genug, dass das Kraftfahrzeug darin einparken kann, kann diese dem Fahrer als Abstellplatz empfohlen werden und/oder ein automatischer Einparkvorgang eingeleitet werden, nachdem die Parklücke ja ohnehin bereits vermessen ist.

DE 10 2011 118 726 A1 offenbart beispielhaft ein Verfahren zum Erkennen einer Parklücke für ein Kraftfahrzeug, ein Parkhilfesystem und ein Kraftfahrzeug mit einem Parkhilfesystem. Dabei wird ein geometrischer Parameter der Parklücke anhand von Sensordaten einer Sensoreinrichtung des Parkhilfesystems ermittelt und es werden weitere, von den Sensordaten unterschiedliche Umgebungsinformationen des Kraftfahrzeugs mittels des Parkhilfesystems erfasst. Die Parklücke wird anhand des geometrischen Parameters erkannt, wobei hierbei auch die weiteren Umgebungsinformationen berücksichtigt werden. Die weiteren Umgebungsinformationen können anhand von Kartendaten des Navigationssystems und/oder anhand eines Kamerabildes ermittelt werden, beispielsweise, um ein Parkverbot zu erkennen, indem eine Verkehrszeichenerkennung verwendet wird.

Allgemein kann also gesagt werden, dass Fahrzeugsysteme, die beim Abstellen des Kraftfahrzeugs, insgesamt also in der Vorbereitung und/oder Durchführung eines Parkvorgangs unterstützen, immer dann auf Probleme stoßen, wenn vermeintliche Abstellmöglichkeiten, mithin Parklücken oder Parkmöglichkeiten, nicht genutzt werden dürfen, weil es sich beispielsweise um eine Feuerwehrzufahrt, eine Hofzufahrt, eine zeitlich beschränkte Parkmöglichkeit und/oder ein Parkverbot handelt. Auf derartige Sachverhalte wird üblicherweise mit einem einfachen Straßenschild hingewiesen. Das Verbot bzw. die Einschränkung wird entweder direkt für einen definierten Abstellplatz ausgeschildert oder durch Zonen markiert (beispielsweise Halteverbotszonen). Ein aufmerksam die Umgebung beobachtender, sein Kraftfahrzeug steuernder Fahrzeugführer kann auf diese Verbotsschilder entsprechend reagieren.

Viele aktuelle Kraftfahrzeuge mit einem Einparkmodus sind ebenfalls darauf angewiesen, dass letztlich ein Mensch die Entscheidung trifft, ob eine vom Kraftfahrzeug detektierte Abstellmöglichkeit genutzt werden darf. Bei derartigen Systemen wird durch die Sensorik zunächst nur ermittelt, ob die Größe der Parklücke ausreichend ist, und allenfalls, ob es eine seitliche Begrenzung, beispielsweise einen Gehsteig, gibt. Bei derartigen grundlegenden Fahrzeugsystemen basiert die zusätzliche oder alleinige sensorische Erfassung von Abstellmöglichkeiten hauptsächlich auf drei Komponenten, die gemeinsam eine Verifizierung der Kandidatenabstellmöglichkeit als verwendbarer Abstellplatz ermöglichen sollen. Diese Komponenten sind zum einen die Erfassung und Auswertung der Umgebung mit Kameradaten, zum anderen die Vermessung per Ultraschall und schließlich der Abgleich mit digitalem Kartenmaterial, wie beispielhaft in der genannten DE 10 2011 118 726 A1 beschrieben.

Nachteile treten immer dann auf, wenn autonome Systeme mit oder ohne Fahrer oder andere autonome Mobilitätslösungen verwendet werden. Denn für Fahrzeugsysteme, die selbst die Entscheidung treffen sollen, welcher Abstellplatz genutzt wird und diesen insbesondere auch selbst ansteuern sollen, ist die klare Unterscheidung zwischen Parkmöglichkeiten, die genutzt werden dürfen, und Abstellmöglichkeiten, die nicht genutzt werden dürfen, aktuell nicht möglich. Autonome Kraftfahrzeuge, Drohnen und ähnliche mobile Systeme können deshalb durch mangelnde oder fehlerhafte Information unter Umständen einen gefährlichen Eingriff in den öffentlichen Verkehr verursachen oder Rettungsdienste und/oder Privatpersonen behindern.

Lösungen mit Kameras erlauben diese klare Unterscheidung ebenso nicht. Beispielsweise werden Schilder oder sonstige Hinweise auf Parkverbote auf verschiedene Arten angebracht. So können derartige Hinweise beispielsweise auf die Fahrbahn gemalt sein, als Schild auf einem Tor oder an einer Mauer befestigt sein, als Texthinweis unter Straßenschildern befestigt werden und dergleichen. Dennoch müssen solche Hinweise bei jedem Wetter und zu jeder Tageszeit als solche erkannt werden können. Kamerabasierte Analysen bergen hier hohe Risiken, zum einen im Hinblick auf eine mangelnde Umgebungsbeleuchtung, zum anderen im Hinblick auf Grenzen der Erkennungsalgorithmen für Verkehrsschilder. Beispiele, bei denen Probleme auftreten, sind schlechtes Licht, ein schräger Sichtwinkel auf das Schild, weit entfernt angebrachte Schilder, Aufkleber oder Graffitis auf den Hinweisen, die teilweise Verdeckung durch Pflanzenwuchs und dergleichen. Die Nutzung der Ultraschallsensoren kann nur dazu dienen, die ausreichende Größe der Kandidatenabstellmöglichkeit zu vermessen. Weitere Informationen werden nicht erhalten.

Digitale Karten können lediglich zur Absicherung dienen, nachdem das Kartenmaterial veraltet sein kann. Ebenso besteht die Gefahr, dass Kraftfahrzeuge, die fälschlicherweise eine Parkmöglichkeit melden, die Karteneinträge verfälschen und ein nicht freigegebener Parkplatz in den Onlinedaten auftaucht. Weiteres Risikopotential beinhalten beispielsweise Baustellen und/oder Straßensperren, die dem Kartendienst nicht gemeldet oder nicht abgemeldet werden. Dies gilt insbesondere für Tagesbaustellen oder kurzfristige Straßensperren.

DE 10 2015 003 888 A1 offenbart ein Verfahren zum Betreiben eines autonomen Kraftfahrzeugs. Dieses umfasst wenigstens eine Ermittlungseinrichtung zum Ermitteln wenigstens einer Information, die ein Umfeld des Kraftfahrzeugs und/oder wenigstens einen Benutzerstandort relativ zu einer Position des Kraftfahrzeugs betrifft, und wenigstens eine Steuerungseinrichtung zum Steuern wenigstens einer Funktion und/oder wenigstens einer Einrichtung des Kraftfahrzeugs, wobei in einem abgestellten Zustand des Kraftfahrzeugs abhängig von der wenigstens einen ermittelten Information die wenigstens eine Funktion und/oder die wenigstens eine Einrichtung des Kraftfahrzeugs von der Steuerungseinrichtung gesteuert wird. Das Kraftfahrzeug kann somit durch das erfindungsgemäße Verfahren derart betrieben werden, dass es, ohne eine Steuerung durch einen Benutzer, auf Umwelteinflüsse und/oder wenigstens einen Benutzerstandort relativ zu einer Position des Kraftfahrzeugs reagieren kann, indem das Kraftfahrzeug beziehungsweise wenigstens eine Funktion und/oder eine Einrichtung des Kraftfahrzeugs entsprechend gesteuert wird.

DE 10 2015 211 514 A1 betrifft ein Verfahren, gemäß den Merkmalen des Oberbegriffs von Anspruch 1, und eine Vorrichtung zur Fahrtassistenz, wobei Fahrzeuge mit Umfeldsensoren Informationen über mögliche freie Parkplätze erfassen und an eine zentrale Einrichtung übermitteln, welche diese in einer geschichteten Karte abspeichert. Neben der Parkplatzkartenschicht kann die geschichtete Karte noch eine Straßenkartenschicht und weitere Kartenschichten umfassen, welche es insbesondere auch ermöglichen, mögliche Parkplätze zu verwerfen, an denen ein Parken dauerhaft oder temporär nicht gestattet ist. Bei der zentralen Einrichtung handelt es sich um einen Server oder einen Cloud-Server, der eingerichtet ist, mit den Fahrzeugen zu kommunizieren.

Der Erfindung liegt daher die Aufgabe zugrunde, eine verbesserte, verlässlichere Möglichkeit für Fahrzeugsysteme anzugeben, Kandidatenabstellmöglichkeiten hinsichtlich der Zulässigkeit einer Auswahl als Abstellplatz zu beurteilen.

Zur Lösung dieser Aufgabe ist bei einem Verfahren der eingangs genannten Art erfindungsgemäß vorgesehen, dass wenigstens einer Kandidatenabstellmöglichkeit eine als ein Beacon ausgebildete Sendeeinrichtung, die im Umfeld der Kandidatenabstellmöglichkeit positioniert ist, lokal, insbesondere unmittelbar lokal zugeordnet ist, von der das Kraftfahrzeug eine die Zulässigkeit des Abstellens des Kraftfahrzeugs auf der Kandidatenabstellmöglichkeit und/oder einer Durchfahrbarkeit wenigstens eines Abschnitts eines zu der Kandidatenabstellmöglichkeit führenden Weges beschreibende Zulässigkeitsinformation empfängt, wobei die Auswahl des zu verwendenden Abstellplatzes in Abhängigkeit der Zulässigkeitsinformation erfolgt, wobei der Betrieb des Kraftfahrzeugs bei der Suche nach einem Abstellplatz vollständig automatisch geführt durch das Fahrzeugsystem erfolgt.

Erfindungsgemäß wird also vorgeschlagen, Kandidatenabstellmöglichkeiten Sendeeinrichtungen, insbesondere sogenannte "Beacons" lokal zuzuordnen, von denen eine Zulässigkeitsinformation erhalten werden kann, die beschreibt, inwieweit ein Parkverbot/Durchfahrtsverbot vorliegen könnte. Die Sendeeinrichtungen sind zweckmäßig im Umfeld von Zufahrten, Parkverboten oder ähnlichen Abstellmöglichkeiten vergleichbaren Verkehrsflächen zu positionieren, um mit Kraftfahrzeugen mit entsprechenden Fahrzeugsystemen zu kommunizieren und entsprechende Zulässigkeitsinformationen zu senden. Die Sendeeinrichtungen sind mithin bevorzugt in unmittelbarer räumlicher Nähe zu der Kandidatenabstellmöglichkeit angeordnet. Insbesondere kann vorgesehen sein, dass die Sendeeinrichtungen in einem Abstand von weniger als 10m, insbesondere weniger als 5m, von der Kandidatenabstellmöglichkeit, der sie zugeordnet sind, angeordnet sind. So weisen die Sendeeinrichtung insbesondere einen lokalen Sendebereich auf, der beispielsweise kleiner als 100 Meter im Durchmesser betragen kann und im Wesentlichen um die Kandidatenabstellmöglichkeit zentriert ist. Die Sendeeinrichtung, insbesondere der Beacon, ist also nicht nur hinsichtlich der Information, sondern auch räumlich, der Kandidatenabstellmöglichkeit zugeordnet. Bevorzugt kann die Zuordnung exklusiv sein, so dass also jeder Kandidatenabstellmöglichkeit eine eigene Sendeeinrichtung zugeordnet ist. Auf diese Weise erhalten autonome Mobilitätssysteme zusätzliche Informationen, um eigenständig eine Kandidatenabstellmöglichkeit als möglichen Abstellplatz im Gegensatz zu Parkverbotsbereichen, Einfahrten, Zufahrten für Feuerwehren und dergleichen identifizieren zu können. Damit liegt eine garantierte, digital sicherbare und ortsgebundene Zulässigkeitsinformation vor, für die neben den Sendeeinrichtungen keine weitere Infrastruktur erforderlich ist, da die Kommunikation unmittelbar über ein Transpondersignal von der Sendeeinrichtung zum Kraftfahrzeug erfolgt.

Der Betrieb des Kraftfahrzeugs bei der Suche nach einem Abstellplatz erfolgt vollständig automatisch geführt durch das Fahrzeugsystem. Auf diese Weise können vollständig autonome Systeme, die beispielsweise gezielt vom Fahrer aktiviert werden, damit das Kraftfahrzeug eigenständig einen Abstellplatz sucht und insbesondere auch anfährt, feststellen, ob Kandidatenabstellmöglichkeiten tatsächlich zulässige Abstellplätze darstellen oder nicht. Die Erfindung erlaubt also eine vollständige Abkopplung von einer Beurteilung des gegebenenfalls anwesenden Fahrers, wobei angemerkt wird, dass sich die Erfindung allgemein auch auf andere mobile Einheiten, die insbesondere gänzlich fahrerlos betrieben werden, als Kraftfahrzeuge anwenden lässt, beispielsweise auch Drohnen oder dergleichen.

In einer vorteilhaften Weiterbildung kann vorgesehen sein, dass eine eine Ortsbeschreibung des den Abschnitt und/oder die Kandidatenabstellmöglichkeit umfassenden Bereichs, auf den sich die Zulässigkeitsinformation bezieht und/oder eine eine Art eines Abstellverbots und/oder Durchfahrverbots beschreibende Verbotsinformation und/oder eine eine zeitliche und/oder sachliche Begrenzung des Abstellverbots und/oder Durchfahrverbots beschreibende Gültigkeitsinformation und/oder eine Statusinformation umfassende Zulässigkeitsinformation verwendet wird. Die Zulässigkeitsinformation kann also eine Vielzahl von nützlichen Teilinformationen behalten, wobei das Kraftfahrzeug aus einer Ortsbeschreibung ableiten kann, auf welche potentiell vorhanden Kandidatenabstellmöglichkeit sich die Zulässigkeitsinformation einer jeweiligen Sendeeinrichtung bezieht. Nachdem viele Parkmöglichkeiten auch zeitlich bzw. sachlich, beispielsweise im Hinblick auf die Art der abzustellenden Kraftfahrzeuge, reglementiert ist, ist es besonders zweckmäßig, wenn die Zulässigkeitsinformation auch eine Gültigkeitsinformation enthält. Die Gültigkeitsinformation kann mithin beispielsweise beschreiben, inwiefern eine Parkmöglichkeit zeitlich limitiert ist und dergleichen. Es ist ferner zweckmäßig, wenn der Grund des Verbots ebenso kommuniziert wird, beispielsweise in Form einer Verbotsinformation, die insbesondere den Abschnitt und/oder die Kandidatenabstellmöglichkeit als von einem Parkverbot betroffener Bereich und/oder als einer freizuhaltenden Zufahrt und/oder einem Baustellenbereich zugehörig beschreibt. Schließlich kann die Zulässigkeitsinformation auch eine Statusinformation, beispielsweise als Statuscode, umfassen, welche beispielsweise angeben kann, inwiefern die Sendeeinrichtung aktiv ist und/oder welcher Typ an Informationen enthalten ist, so dass ein Kraftfahrzeug die Relevanz der Zulässigkeitsinformation überprüfen kann.

Vorzugsweise kann mithin vorgesehen sein, dass das Fahrzeugsystem die Gültigkeitsinformation und/oder die Statusinformation auf eine gegebene Relevanz für das Kraftfahrzeug auswertet, wobei eine weitere Auswertung der Zulässigkeitsinformation nur bei gegebener Relevanz erfolgt. Mit anderen Worten kann das Fahrzeugsystem anhand der Statusinformation und/oder der Gültigkeitsinformation entscheiden, ob die empfangene Nachricht, also die Zulässigkeitsinformation, weitergehend interpretiert werden muss. Werden auf diese Art und Weise Zulässigkeitsinformationen ausgeschlossen, können Berechnungszeiten und/oder Berechnungsressourcen eingespart werden.

Eine vorteilhafte Ausgestaltung sieht ferner vor, dass die Zulässigkeitsinformation ferner eine Größe der Kandidatenabstellmöglichkeit und/oder eine bevorzugte Abstellposition beschreibt. Eine Größe kann beispielsweise genutzt werden, um Vermessungsdaten von Umgebungssensoren zu plausibilisieren und/oder unmittelbar einen Vergleich anzustellen, ob denn die Größe überhaupt für das Kraftfahrzeug ausreichend ist. Informationen zu einer Soll-Abstellposition, insbesondere umfassend auch eine Orientierung, können später zur bevorzugt ebenso automatisch durch das Fahrzeugsystem durchgeführten Steuerung des Abstellvorgangs/Parkvorgangs genutzt werden. Diesbezüglich kann die Zulässigkeitsinformation selbstverständlich auch weitere, zu einem späteren Zeitpunkt nützliche Informationen enthalten, beispielsweise Hinweise zur Anfahrtwahl und dergleichen.

Dabei sei an dieser Stelle noch darauf hingewiesen, dass über die Zulässigkeitsinformation hinaus, beispielsweise, um zu überprüfende Kandidatenabstellmöglichkeiten, insbesondere Parklücken, erst aufzufinden, selbstverständlich die im Stand der Technik bereits grundsätzlich bekannten Informationen genutzt werden können. So kann vorgesehen sein, dass die Kandidatenabstellmöglichkeiten mittels wenigstens eines Umgebungssensors des Kraftfahrzeugs und/oder mittels digitaler Karteninformationen detektiert und/oder vermessen werden. Wurde eine Kandidatenabstellmöglichkeit detektiert, kann dann die Zulässigkeitsinformation, so sie diesbezüglich vorhanden ist, überprüft werden, um festzustellen, ob sich die Kandidatenabstellmöglichkeit tatsächlich als Abstellplatz für das Kraftfahrzeug eignet. Ferner kann es, wie bereits angedeutet, zweckmäßig sein, wenn das Fahrzeugsystem auch zur zumindest teilweise automatischen Durchführung des Parkvorgangs ausgebildet ist.

Konkret kann vorgesehen sein, dass eine von einem Abstellverbot und/oder einem Durchfahrtverbot für das Kraftfahrzeug betroffene Kandidatenabstellmöglichkeit nicht als Abstellplatz ausgewählt wird. Durchfahrtsverbote für zwangsläufig zu befahrende Abschnitte des Weges zu der Kandidatenabstellmöglichkeit und/oder Abstellverbote, insbesondere Parkverbote, können mithin einen Ausschlusstatbestand darstellen, durch den die Kandidatenabstellmöglichkeit unmittelbar als möglicher Abstellplatz verworfen wird. Gerade bei Vorliegen von eine zeitlichen Begrenzung betreffenden Gültigkeitsinformationen kann diese selbstverständlich auch genauer analysiert werden. So kann vorgesehen sein, dass bei Vorliegen einer eine zeitliche Begrenzung betreffenden Gültigkeitsinformation und eines vorbekannten oder prädizierten Wertes für die Abstellzeit ein Ausschluss der Kandidatenabstellmöglichkeit durch Vergleich der zeitlichen Begrenzung mit der Abstellzeit überprüft wird. Ist beispielsweise aus Kalenderdaten und/oder die bisherige Nutzung des Kraftfahrzeugs beschreibenden Historiendaten als Eingangsdaten und/oder durch eine Eingabe des Fahrers bekannt, wie lange das Kraftfahrzeug voraussichtlich abgestellt werden wird, oder lässt sich eine derartige Abstellzeit prädizieren, beispielsweise wiederum aufgrund der genannten Eingangsdaten, kann mithin auch überprüft werden, ob die zeitliche Begrenzung gemäß der Gültigkeitsinformation nicht verletzt wird.

Besonders zweckmäßig ist es, wenn eine kraftfahrzeugseitige Kommunikationseinrichtung über den Bluetooth Low Energy-Standard mit der Sendeeinrichtung kommuniziert. Dieser BLE-Standard hat eine kurze, aber geeignete Reichweite und benötigt äußerst wenig Energie, so dass Energiequellen für die Sendeeinrichtungen günstig gewählt werden können. Zudem handelt es sich um einen Standard, für den in vielen Kraftfahrzeugen ohnehin eine Schnittstelle vorgesehen ist. Selbstverständlich ist es auch möglich, andere Übertragungsstandards/Übertragungsmethoden heranzuziehen.

Eine denkbare Ausgestaltung der Erfindung sieht vor, dass die Übertragung der Zulässigkeitsinformation als Antwort auf ein insbesondere als Broadcast gesendetes Anfragesignal des Fahrzeugsystems gesendet wird. Beispielsweise kann also vorgesehen sein, dass das Kraftfahrzeug bzw. Fahrzeugsystem dann, wenn eine Kandidatenabstellmöglichkeit durch Umgebungssensoren oder dergleichen detektiert wurde, ein Anfragesignal aussendet, das von Sendeeinrichtungen im Umfeld empfangen wird und diese anstößt, ihre Zulässigkeitsinformation zu versenden.

Eine bevorzugte Weiterbildung der vorliegenden Erfindung sieht jedoch vor, dass die Zulässigkeitsinformation zyklisch als Broadcast von der Sendeeinrichtung ausgesendet wird. Auf diese Art und Weise senden die Sendeeinrichtungen, also die Beacons, dauerhaft ihre Zulässigkeitsinformation in einem definierten Sendezyklus aus. Somit können alle Kraftfahrzeuge im Empfangsbereich diese Zulässigkeitsinformation nutzen. Zeitaktuelle Änderungen werden von den Kraftfahrzeugen erfasst. Bei Verwendung eines wenig Energie verbrauchenden Übertragungsstandards, beispielsweise Bluetooth Low Energy, lässt sich dies auch bei Sendeeinrichtungen ohne eigenen elektrischen Energieanschluss leicht umsetzen.

Eine besonders vorteilhafte Ausgestaltung der vorliegenden Erfindung ergibt sich, wenn die Sendeeinrichtung über eine Internetverbindung und/oder eine Mobilfunkverbindung verfügt und die Zulässigkeitsinformation über diese programmiert und/oder aktualisiert wird. Mit besonderem Vorteil kann die Sendeeinrichtung also online programmiert werden, um hochaktuell Informationen aktualisieren zu können und dergleichen. Auf diese Art und Weise wird eine nochmals erhöhte Zuverlässigkeit der Informationen erreicht.

Die Sendeeinrichtung kann im Übrigen zur Energieversorgung eine Batterie und/oder eine Solareinrichtung und/oder einen kabelgebundenen Stromanschluss aufweisen. Auch ist es denkbar, eine Internetverbindung kabelgebunden zu realisieren.

Zusätzlich oder alternativ ist es auch denkbar, die Sendeeinrichtungen lokal zu programmieren. Zweckmäßigerweise werden hierbei Sicherheitsmechanismen verwendet, um vor unbefugtem Zugriff zu schützen, beispielsweise Zertifikate.

Neben dem Verfahren betrifft die Erfindung auch ein Kraftfahrzeug, aufweisend ein Fahrzeugsystem, das zur Detektion und Auswahl des zu verwendenden Abstellplatzes aus einer Mehrzahl von Kandidatenabstellmöglichkeiten, gegebenenfalls zur zumindest teilweise automatischen Durchführung des Parkvorgangs und zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können. Insbesondere weist das Kraftfahrzeug eine Kommunikationseinrichtung zur Kommunikation mit Sendeeinrichtungen auf.

Schließlich betrifft die Erfindung auch eine Sendeeinrichtung (Beacon), die die Zulässigkeitsinformation gemäß dem erfindungsgemäßen Verfahren versendet. Eine solche Sendeeinrichtung weist mithin eine Sendeeinheit zum Aussenden einer die Zulässigkeit des Abstellens des Kraftfahrzeugs auf einer der Sendeeinrichtung zugeordneten Abstellmöglichkeit und/oder eines Durchfahrens wenigstens eines Abschnittes eines zu der Abstellmöglichkeit führenden, der Sendeeinrichtung zugeordneten Weges beschreibenden Zulässigkeitsinformation. Die Sendeeinrichtung nutzt also eine Sendeeinheit, um die Zulässigkeitsinformation drahtlos, insbesondere per Funk durch elektromagnetische Wellen, auszusenden und bildet so eine Art insbesondere ausschließlich "elektromagnetisches Verkehrszeichen". In einer bevorzugten Ausgestaltung, die speziell auf die Bedürfnisse des vollständig automatisierten Fahrens abgestellt ist, stellt das Aussenden der Zulässigkeitsinformation die einzige Form der Wiedergabe von Verkehrsinformation durch die Sendeeinrichtung dar. Sie ist somit unabhängig von optischen und/oder akustischen Ausgaben oder Anzeigemitteln und solchen optischen und/oder akustischen und/oder sonstigen Anzeigemitteln weder zugeordnet noch umfasst sie sie.

Sämtliche Ausführungen zur Sendeeinrichtung, wie sie bezüglich der Beschreibung des erfindungsgemäßen Verfahrens geäußert wurden, lassen sich selbstverständlich analog auf die erfindungsgemäße Sendeeinrichtung übertragen. Die Sendeeinrichtung kann eine Speichereinheit zum Speichern der Zulässigkeitsinformation und/oder eine Steuereinheit zur Steuerung des Betriebs der Sendeeinrichtung aufweisen. Bevorzugt ist die Sendeeinheit zur Nutzung eine Bluetooth-Standards, insbesondere Bluetooth Low Energy, ausgebildet. Die Sendeeinrichtung weist vorzugsweise eine Fernkommunikationsschnittstelle, insbesondere in das Internet, und/oder eine Nahkommunikationsschnittstelle auf. Über die Fernkommunikationsschnittstelle ist es möglich, die Sendeeinrichtung, konkret die Zulässigkeitsinformation und die Art ihrer Ausstrahlung, online zu programmieren, wie oben bereits dargelegt. Die Steuereinheit kann mithin auch entsprechende Aussendeanweisungen, beispielsweise den Zyklus eines Broadcasts, entsprechend durch Ansteuerung der Sendeeinheit umsetzen.

Die Sendeeinrichtung kann ferner ein Gehäuse aufweisen, welches beispielsweise aus Kunststoff gefertigt ist, und/oder Befestigungsmittel zur Befestigung der Sendeeinrichtung, insbesondere benachbart oder innerhalb ihres Gültigkeitsbereichs. Das Gehäuse kann Manipulationsschutzeinrichtungen und/oder, falls eine drahtgebundene Nahkommunikationsschnittstelle vorliegt, Anschlüsse für eine solche aufweisen. Ferner kann die Sendeeinrichtung einen Anschluss an eine äußere Energiequelle und/oder eine interne Energiequelle, insbesondere eine Batterie, umfassen.

Ein solches Konzept einer Sendeeinrichtung, insbesondere in einer Ausgestaltung, in der Verkehrsinformationen ausschließlich durch die Sendeeinheit über Funk übertragen werden, lässt sich prinzipiell auch auf andere Anwendungsgebiete, insbesondere im Bereich des autonomen Fahrens und/oder für andersartige Verkehrsinformationen, übertragen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: eine Verkehrssituation.

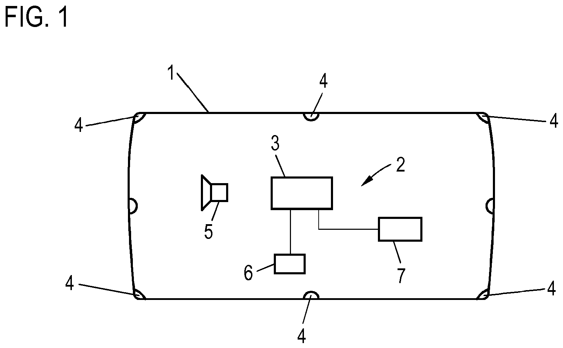

Fig. 1 zeigt eine Prinzipskizze eines erfindungsgemäßen Kraftfahrzeugs 1. Das Kraftfahrzeug 1 weist ein Fahrzeugsystem 2 auf, das vorliegend zum einem zur vollständig autonomen, mithin vollautomatischen Führung des Kraftfahrzeugs 1 ausgebildet ist, zum anderen aber auch als ein Parkassistenzsystem wirkt. Hierzu verarbeitet ein Steuergerät eine Vielzahl von Eingangsdaten, um aus Kandidatenabstellmöglichkeiten in der Umgebung des Kraftfahrzeugs 1 einen geeigneten und zulässigen Abstellplatz auswählen zu können. Auf diesem Abstellplatz kann dann insbesondere auch vollständig automatisch geführt eingeparkt werden.

Eingangsdaten diesbezüglich stammen, wie grundsätzlich bekannt, zunächst von Umgebungssensoren des Kraftfahrzeugs 1, wobei vorliegend Ultraschallsensoren 4 und eine Kamera 5 beispielhaft gezeigt sind. Diese Sensordaten können beispielsweise dahin ausgewertet werden, ob Kandidatenabstellmöglichkeiten in der Umgebung des Kraftfahrzeugs existieren, welche auch vermessen werden können, um zu überprüfen, ob das Kraftfahrzeug 1 dort einparken kann. Eine weitere Quelle für Eingangsdaten ist das Navigationssystem 6 des Kraftfahrzeugs 1, in dem annotiertes digitales Kartenmaterial vorliegen kann oder abgerufen werden kann, welches ebenso Hinweise auf Abstellmöglichkeiten geben kann und in einigen Ausführungsbeispielen sogar Informationen darüber enthalten kann, ob die Abstellmöglichkeit gerade belegt ist. Eine weitere Quelle von Eingangsdaten ist vorliegend jedoch auch eine Kommunikationseinrichtung 7, die Daten von Kandidatenabstellmöglichkeiten zugeordneten Sendeeinrichtungen empfangen kann. Dabei handelt es sich um Zulässigkeitsinformationen, die eine Vielzahl verschiedener Teilinformationen enthalten können, die nützlich sind, insbesondere jedoch anzeigen, ob das Abstellen des Kraftfahrzeugs auf der Kandidatenabstellmöglichkeit erlaubt ist und/oder ob die Zufahrt zu der Kandidatenabstellmöglichkeit erlaubt ist.

Die Zulässigkeitsinformation umfasst vorliegend eine Ortsbeschreibung des den Abschnitt des Weges und/oder die Kandidatenabstellmöglichkeit, der bzw. denen sie zugeordnet ist, umfassenden Bereichs. Beispielsweise kann die Ortsbeschreibung die Ausdehnung einer Park- oder Halteverbotszone beschreiben. Ferner umfasst die Zulässigkeitsinformation, die von der Sendeeinrichtung empfangen wird, eine Verbotsinformation, die eine Art eines Abstellverbots und/oder Durchfahrverbots beschreibt, sowie eine Gültigkeitsinformation, die eine zeitliche und/oder sachliche Begrenzung des Abstellverbots und/oder des Durchfahrverbots beschreibt. In zweckmäßigen Ausgestaltungen kann die Zulässigkeitsinformation ferner eine Statusinformation, eine Größe der Kandidatenabstellmöglichkeit und eine bevorzugte Abstellposition des Kraftfahrzeugs auf der Kandidatenabstellmöglichkeit sowie bei Bedarf weitere zusätzliche Teilinformationen, die auch für einen Parkvorgang nützlich sein können, enthalten.

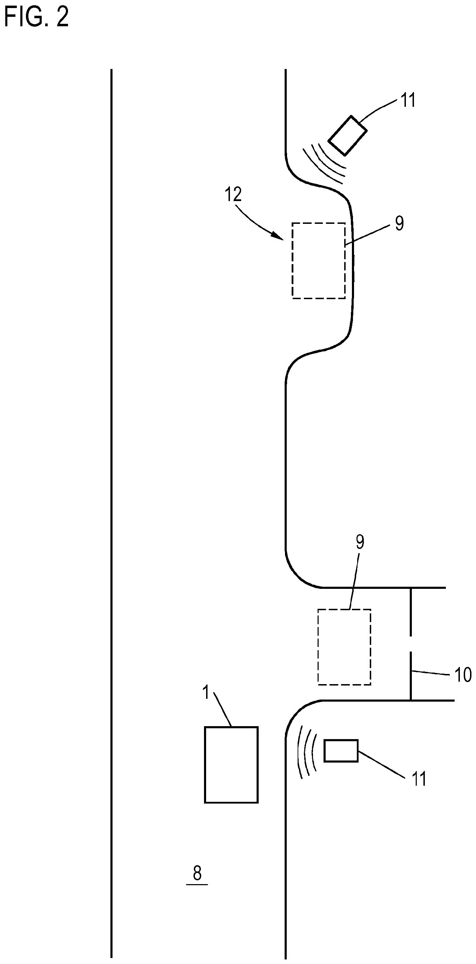

Fig. 2 erläutert den Ablauf des erfindungsgemäßen Verfahrens anhand einer beispielhaften Verkehrssituation, in der sich das Kraftfahrzeug 1 befindet. Das Kraftfahrzeug 1 fährt gerade auf einer Straße 8 und befindet sich in einem Betriebsmodus, in dem das Kraftfahrzeug 1 vollautomatisch auf der Suche nach einem Abstellplatz für das Kraftfahrzeug 1 betrieben wird. Dabei wird es mit seinen gezeigten Umgebungssensoren 4, 5 die grundsätzlich freien, potentiellen Kandidatenabstellmöglichkeiten 9 erkennen, an denen sich zurzeit kein weiteres Kraftfahrzeug befindet. Auch von den Abmessungen her könnte das Kraftfahrzeug 1 die Kandidatenabstellmöglichkeiten 9 durchaus als Abstellplatz auswählen. Allerdings handelt es sich, wie in Fig. 2 zu erkennen, bei der vorderen der Kandidatenabstellmöglichkeiten 9 um eine Zufahrt zu einem Tor 10, in der das Kraftfahrzeug 1 gerade nicht parken sollte. Die hintere Abstellmöglichkeit 9 befindet sich zwar in einer Parkbucht, für die jedoch zeitliche Begrenzungen der Parkerlaubnis (und somit auch eines Parkverbots) bestehen.

Um dem Kraftfahrzeug 1 diese Informationen hoch aktuell und verlässlich zukommen zu lassen, sind den Kandidatenabstellmöglichkeiten 9 jeweils erfindungsgemäße Sendeeinrichtungen 11 zugeordnet, die per Broadcast im Bluetooth Low Energy-Standard ihre jeweilige Zulässigkeitsinformation senden. Neben der Ortsbeschreibung, die es dem Fahrzeugsystem 2 des Kraftfahrzeugs 1 erlaubt, die Zulässigkeitsinformation der Kandidatenabstellmöglichkeit 9 zuzuordnen, enthält die Zulässigkeitsinformation bezüglich der vorderen Kandidatenabstellmöglichkeit 9 den Hinweis, dass aufgrund einer ständig genutzten Zufahrt ein Parken dort grundsätzlich nicht möglich ist. Die Gültigkeitsinformation kann jedoch beschreiben, dass ein kurzzeitiges Parken für Rettungsfahrzeuge und dergleichen erlaubt wird; bei dem Kraftfahrzeug 1 handelt es sich jedoch nicht um ein derartiges Fahrzeug.

Auch die Zulässigkeitsinformation bezüglich der hinteren Kandidatenabstellmöglichkeit enthält eine Gültigkeitsinformation, die entsprechend die Zeiträume beschreibt, in denen bzw. für die ein Parken dort möglich ist.

Bei seiner Analyse, ob die vordere Kandidatenparkmöglichkeit 9 als Abstellplatz ausgewählt werden soll, verarbeitet das Kraftfahrzeug 1 bzw. konkret das Fahrzeugsystem 2 zunächst, falls vorhanden, die Statusinformation, die die Zulässigkeitsinformation jedoch als durchaus relevant für das Kraftfahrzeug 1 beschreibt. Sollte von Sendeeinrichtungen 11 anderen Typs etwas empfangen werden, kann die Verarbeitung der von dieser gesendeten Information unmittelbar abgebrochen werden.

Sodann wird die Gültigkeitsinformation analysiert. Nachdem es sich bei dem Kraftfahrzeug 1 nicht um ein Rettungsfahrzeug handelt, erkennt das Fahrzeugsystem 2 sofort, dass eine weitere Analyse der Zulässigkeitsinformation hier auch nicht sinnvoll wäre, da das Abstellen des Kraftfahrzeugs 1 in der vorderen Kandidatenabstellmöglichkeit ja ohnehin grundsätzlich verboten wäre. Die vordere Kandidatenabstellmöglichkeit 9 wird mithin als Abstellplatz verworfen.

Bezüglich der hinteren Kandidatenabstellmöglichkeit 9 wird wiederum die Gültigkeitsinformation überprüft werden, wobei hier eine vorbekannte oder prädizierte Abstellzeit, für die das Kraftfahrzeug 1 voraussichtlich dort verbleiben soll, mit berücksichtigt wird, um die zeitlichen Begrenzungen korrekt in Betracht zu ziehen. Vorliegend soll das Kraftfahrzeug in einem Zeitraum, in dem das Parken dort grundsätzlich erlaubt wird, für eine Abstellzeit abgestellt werden, die noch im erlaubten Zeitraum liegt und eine Maximalparkzeit nicht überschreitet, so dass die hintere Kandidatenabstellmöglichkeit 9 als Ziel-Abstellplatz 12 ausgewählt wird. Das Fahrzeugsystem 2 führt dann auch den Parkvorgang vollständig automatisch durch.

Es sei an dieser Stelle noch angemerkt, dass die Sendeeinrichtungen 11 vorliegend jeweils über eine Internetverbindung ansprechbar sind. Das bedeutet, sie können online programmiert werden, beispielsweise bei einer notwendigen Aktualisierung der Zuverlässigkeitsinformation, so dass diese immer aktuell gehalten werden kann. Die Sendeeinrichtungen 11 können ferner eine ständig vorhandene elektrische Energieverbindung aufweisen, um entsprechende in ihnen verbaute Transponder, die zyklisch die Zuverlässigkeitsinformation broadcasten, zu betreiben.

## Patentansprüche

1. Verfahren zum Betrieb eines Kraftfahrzeugs (1) hinsichtlich eines vorzunehmenden Parkvorgangs auf einem Abstellplatz (12), wobei das Kraftfahrzeug (1) ein Fahrzeugsystem (2) aufweist, das zur Detektion und Auswahl des zu verwendenden Abstellplatzes aus einer Mehrzahl von Kandidatenabstellmöglichkeiten (9) ausgebildet ist,
**dadurch gekennzeichnet,**
**dass** wenigstens einer Kandidatenabstellmöglichkeit (9) eine als ein Beacon ausgebildete Sendeeinrichtung (11), die im Umfeld der Kandidatenabstellmöglichkeit (9) positioniert ist, lokal zugeordnet ist, von der das Kraftfahrzeug (1) eine die Zulässigkeit des Abstellens des Kraftfahrzeugs (1) auf der Kandidatenabstellmöglichkeit (9) und/oder eines Durchfahrens wenigstens eines Abschnittes eines zu der Kandidatenabstellmöglichkeit (9) führenden Weges beschreibende Zulässigkeitsinformation empfängt, wobei die Auswahl des zu verwendenden Abstellplatzes in Abhängigkeit der Zulässigkeitsinformation erfolgt, wobei der Betrieb des Kraftfahrzeugs (1) bei der Suche nach einem Abstellplatz (12) vollständig automatisch geführt durch das Fahrzeugsystem (2) erfolgt.

2. Verfahren nach Anspruch 1,
**dadurch gekennzeichnet,**
**dass** eine eine Ortsbeschreibung des den Abschnitt und/oder die Kandidatenabstellmöglichkeit (9) umfassenden Bereichs, auf den sich die Zulässigkeitsinformation bezieht, und/oder eine eine Art eines Abstellverbots und/oder Durchfahrverbots beschreibende Verbotsinformation und/oder eine eine zeitliche und/oder sachliche Begrenzung des Abstellverbots und/oder Durchfahrverbots beschreibende Gültigkeitsinformation und/oder eine Statusinformation umfassende Zulässigkeitsinformation verwendet wird.

3. Verfahren nach Anspruch 2,
**dadurch gekennzeichnet,**
**dass** das Fahrzeugsystem (2) die Gültigkeitsinformation und/oder die Statusinformation auf eine gegebene Relevanz für das Kraftfahrzeug (1) auswertet, wobei eine weitere Auswertung der Zulässigkeitsinformation nur bei gegebener Relevanz erfolgt.

4. Verfahren nach Anspruch 2 oder 3,
**dadurch gekennzeichnet,**
**dass** die Verbotsinformation den Abschnitt und/oder die Kandidatenabstellmöglichkeit (9) als von einem Parkverbot betroffener Bereich und/oder als einer freizuhaltenden Zufahrt und/oder einem Baustellenbereich zugehörig beschreibt.

5. Verfahren nach einem der Ansprüche 2 bis 4,
**dadurch gekennzeichnet,**
**dass** die Zulässigkeitsinformation ferner eine Größe der Kandidatenabstellmöglichkeit (9) und/oder eine bevorzugte Abstellposition beschreibt.

6. Verfahren nach einem der Ansprüche 2 bis 5,
**dadurch gekennzeichnet,**
**dass** eine von einem Abstellverbot und/oder einem Durchfahrtverbot für das Kraftfahrzeug (1) betroffene Kandidatenabstellmöglichkeit (9) nicht als Abstellplatz (12) ausgewählt wird.

7. Verfahren nach Anspruch 6,
**dadurch gekennzeichnet,**
**dass** bei Vorliegen einer eine zeitliche Begrenzung betreffenden Gültigkeitsinformation und eines vorbekannten oder prädizierten Wertes für die Abstellzeit ein Ausschluss der Kandidatenabstellmöglichkeit (9) durch Vergleich der zeitlichen Begrenzung mit der Abstellzeit überprüft wird.

8. Verfahren nach einem der vorangehenden Ansprüche,
**dadurch gekennzeichnet,**
**dass** die Kandidatenabstellmöglichkeiten (9) mittels wenigstens eines Umgebungssensors (4, 5) des Kraftfahrzeugs (1) und/oder mittels digitaler Karteninformationen detektiert und/oder vermessen werden.

9. Verfahren nach einem der vorangehenden Ansprüche,
**dadurch gekennzeichnet,**
**dass** eine kraftfahrzeugseitige Kommunikationseinrichtung (7) über den Bluetooth Low Energy-Standard mit der Sendeeinrichtung (11) kommuniziert.

10. Verfahren nach einem der vorangehenden Ansprüche,
**dadurch gekennzeichnet,**
**dass** die Übertragung der Zulässigkeitsinformation als Antwort auf ein insbesondere als Broadcast gesendetes Anfragesignal des Fahrzeugsystems (2) gesendet wird.

11. Verfahren nach einem der vorangehenden Ansprüche,
**dadurch gekennzeichnet,**
**dass** die Zulässigkeitsinformation zyklisch als Broadcast von der Sendeeinrichtung (11) ausgesendet wird.

12. Verfahren nach einem der vorangehenden Ansprüche,
**dadurch gekennzeichnet,**
**dass** die Sendeeinrichtung (11) über eine Internetverbindung und/oder eine Mobilfunkverbindung verfügt und die Zulässigkeitsinformation über diese programmiert und/oder aktualisiert wird.

13. Kraftfahrzeug (1), aufweisend ein Fahrzeugsystem (2), das zur Detektion und Auswahl des zu verwendenden Abstellplatzes aus einer Mehrzahl von Kandidatenabstellmöglichkeiten (9) und zur Durchführung eines Verfahrens nach einem der Ansprüche 1 bis 10 ausgebildet ist.

14. Sendeeinrichtung (11) zur Verwendung in einem Verfahren nach einem der Ansprüche 1 bis 12, aufweisend eine Sendeeinheit zum Aussenden einer die Zulässigkeit des Abstellens des Kraftfahrzeugs (1) auf einer der Sendeeinrichtung (11) zugeordneten Abstellmöglichkeit (9) und/oder eines Durchfahrens wenigstens eines Abschnittes eines zu der Abstellmöglichkeit (9) führenden, der Sendeeinrichtung (11) zugeordneten Weges beschreibenden Zulässigkeitsinformation.

## Claims

1. Method for operating a motor vehicle (1) with respect to a parking operation to be performed at a parking space (12), the motor vehicle (1) having a vehicle system (2) configured to detect and select the parking space to be used from a plurality of candidate parking spaces (9),
**characterised in that**
to at least one candidate parking space (9) there is locally assigned a transmitting device (11) which is in the form of a beacon and which is located in the surroundings of the candidate parking space (9) and from which the motor vehicle (1) receives authorisation information describing the authorisation to park the motor vehicle (1) on the candidate parking space (9) and/or to drive through at least a segment of a route leading to the candidate parking space (9), the selection of the parking space to be used being made in dependence on the authorisation information, the operation of the motor vehicle (1) during the search for a parking space (12) being completely automatically conducted by the vehicle system (2).

2. Method according to claim 1,
**characterised in that**
an authorisation information comprising a location description of the area comprising the segment and/or the candidate parking space (9) to which the authorisation information relates and/or a prohibition information describing a type of parking prohibition and/or transit prohibition and/or a validity information describing a temporal and/or factual limitation of the parking prohibition and/or transit prohibition and/or a status information is used.

3. Method according to claim 2,
**characterised in that**
the vehicle system (2) evaluates the validity information and/or the status information for a given relevance for the motor vehicle (1), wherein a further evaluation of the authorisation information only takes place in the event of a given relevance.

4. Method according to claim 2 or 3,
**characterised in that**
the prohibition information describes the segment and/or the candidate parking space (9) as an area affected by a parking prohibition and/or as an access road that is to be kept clear and/or as belonging to a construction site area.

5. Method according to any one of claims 2 to 4,
**characterised in that**
the authorisation information further describes a dimension of the candidate parking space (9) and/or a preferred parking position.

6. Method according to any one of claims 2 to 5,
**characterised in that**
a candidate parking space (9) that is affected by a parking prohibition and/or a transit prohibition for the motor vehicle (1) is not selected as parking space (12).

7. Method according to claim 6,
**characterised in that**
in the presence of a validity information relating to a temporal limitation and a preknown or predicted value for the parking time, an exclusion of the candidate parking space (9) is checked by comparison of the temporal limitation with the parking time.

8. Method according to any one of the preceding claims,
**characterised in that**
the candidate parking spaces (9) are detected and/or measured by means of at least one environmental sensor (4, 5) of the motor vehicle (1) and/or by means of digital map information.

9. Method according to any one of the preceding claims,
**characterised in that**
a motor vehicle-side communication device (7) communicates with the transmitting device (11) using the Bluetooth Low Energy standard.

10. Method according to any one of the preceding claims,
**characterised in that**
the transmission of the authorisation information is sent as a response to a request signal of the vehicle system (2) sent in particular as a broadcast.

11. Method according to any one of the preceding claims,
**characterised in that**
the authorisation information is transmitted cyclically as a broadcast from the transmitting device (11).

12. Method according to any one of the preceding claims,
**characterised in that**
the transmitting device (11) has an internet connection and/or a mobile radio connection via which the authorisation information is programmed and/or updated.

13. Motor vehicle (1), comprising a vehicle system (2) configured for the detection and selection of the parking space that is to be used from a plurality of candidate parking spaces (9) and for carrying out a method according to any one of claims 1 to 10.

14. Transmitting device (11) for use in a method according to any one of claims 1 to 12, having a transmitting unit for transmitting authorisation information describing the authorisation for parking the motor vehicle (1) on a parking space (9) assigned to the transmitting device (11) and/or for transit through at least a segment of a route leading to the parking space (9) and assigned to the transmitting device (11).

## Revendications

1. Procédé de fonctionnement d'un véhicule automobile (1) en ce qui concerne un processus de stationnement à entreprendre sur un emplacement de stationnement (12), dans lequel le véhicule automobile (1) présente un système de véhicule (2) qui est réalisé pour la détection et la sélection de l'emplacement de stationnement à utiliser à partir d'une pluralité de possibilités de stationnement candidates (9),
**caractérisé en ce qu'**
au moins à une possibilité stationnement candidate (9) est associé localement un dispositif d'émission (11) réalisé comme une balise qui est positionné dans l'environnement de la possibilité de stationnement candidate (9), duquel le véhicule automobile (1) reçoit une information d'autorisation décrivant l'autorisation du stationnement du véhicule automobile (1) sur la possibilité de stationnement candidate (9) et/ou d'un passage d'au moins une section d'une voie menant à la possibilité de stationnement candidate (9), dans lequel la sélection de l'emplacement de stationnement à utiliser est effectuée en fonction de l'information d'autorisation, dans lequel le fonctionnement du véhicule automobile (1) est effectué lors de la recherche d'un emplacement de stationnement (12) de manière complètement guidée automatiquement par le système de véhicule (2).

2. Procédé selon la revendication 1,
**caractérisé en ce qu'**
une description de lieu de la zone comprenant la section et/ou la possibilité de stationnement candidate (9), à laquelle se réfère l'information d'autorisation, et/ou une information d'interdiction décrivant un type d'une interdiction de stationnement et/ou interdiction de passage et/ou une information de validité décrivant une limitation temporelle et/ou matérielle de l'interdiction de stationnement et/ou interdiction de passage et/ou une information d'autorisation comprenant une information de statut est utilisée.

3. Procédé selon la revendication 2,
**caractérisé en ce que**
le système de véhicule (2) évalue l'information de validité et/ou l'information de statut sur une pertinence donnée pour le véhicule automobile (1), dans lequel une autre évaluation de l'information d'autorisation est effectuée uniquement en cas de pertinence donnée.

4. Procédé selon la revendication 2 ou 3,
**caractérisé en ce que**
l'information d'interdiction décrit la section et/ou la possibilité de stationnement candidate (9) comme zone concernée par une interdiction de stationnement et/ou comme un accès à laisser libre et/ou appartenant à une zone de chantier.

5. Procédé selon l'une des revendications 2 à 4,
**caractérisé en ce que**
l'information d'autorisation décrit de plus une grandeur de la possibilité de stationnement candidate (9) et/ou une position de stationnement préférée.

6. Procédé selon l'une des revendications 2 à 5,
**caractérisé en ce qu'**
une possibilité de stationnement candidate (9) concernée par une interdiction de stationnement et/ou une interdiction de passage pour le véhicule automobile (1) n'est pas sélectionnée comme emplacement de stationnement (12).

7. Procédé selon la revendication 6,
**caractérisé en ce qu'**
en présence d'une information de validité concernant une limitation temporelle et d'une valeur préconnue ou prédite pour le temps de stationnement une exclusion de la possibilité de stationnement candidate (9) est vérifiée par comparaison de la limitation temporelle avec le temps de stationnement.

8. Procédé selon l'une des revendications précédentes,
**caractérisé en ce que**
les possibilités de stationnement candidates (9) sont détectées et/ou mesurées au moyen d'au moins un capteur environnemental (4, 5) du véhicule automobile (1) et/ou au moyen d'informations de carte numériques.

9. Procédé selon l'une des revendications précédentes,
**caractérisé en ce qu'**
un dispositif de communication (7) côté véhicule automobile communique par le biais de la norme Bluetooth basse énergie avec le dispositif d'émission (11).

10. Procédé selon l'une des revendications précédentes,
**caractérisé en ce que**
la transmission de l'information d'autorisation est émise comme réponse à un signal de demande émis en particulier comme diffusion du système de véhicule (2).

11. Procédé selon l'une des revendications précédentes,
**caractérisé en ce que**
l'information d'autorisation est émise de manière cyclique comme diffusion par le dispositif d'émission (11).

12. Procédé selon l'une des revendications précédentes,
**caractérisé en ce que**
le dispositif d'émission (11) dispose d'une connexion Internet et/ou d'une connexion radio mobile et l'information d'autorisation est programmée et/ou actualisée par le biais de celle-ci.

13. Véhicule automobile (1), présentant un système de véhicule (2) qui est réalisé pour la détection et la sélection de l'emplacement de stationnement à utiliser à partir d'une pluralité de possibilités de stationnement candidats (9) et pour la mise en œuvre d'un procédé selon l'une des revendications 1 à 10.

14. Dispositif d'émission (11) pour l'utilisation dans un procédé selon l'une des revendications 1 à 12, présentant une unité d'émission pour l'émission d'une information d'autorisation décrivant l'autorisation du stationnement du véhicule automobile (1) sur une possibilité de stationnement (9) associée au dispositif d'émission (11) et/ou d'un passage d'au moins une section d'une voie associée au dispositif d'émission (11), menant à la possibilité de stationnement (9).
